# EUROPEAN PATENT APPLICATION

(11) **EP 3 379 403 A1**
(43) Date of publication of application: **26.09.2018**
(21) Application number: 18163038.5
(22) Date of filing: 21.03.2018
(51) Int. Cl.: G06F 3/06, G06F 1/18, G11B 33/12, G11B 33/14

(54) **NON-VOLATILE MEMORY DRIVES**

(30) Priority: 23.03.2017 US 201715468022
(71) Applicant: Hewlett Packard Enterprise Development L.P., Houston, TX 77070 (US)
(72) Inventor: Norton, John, Houston, TX 77070 (US); Bolich, Bryan, Roseville, CA 95747 (US); Silverthorn, Sarah, Palo Alto, CA 94304 (US); Armes, James Lee, Fort Collins, CO 8052 (US); Neumann, Matthew, Roseville, CA 95747 (US); Tsai, Pinche, Houston, TX 77070 (US); Cash, Kevin M., Houston, TX 77070 (US)
(74) Representative: ZBM Patents - Zea, Barlocci & Markvardsen

(57) **Abstract**

Examples herein relate to non-volatile memory (NVM) drives. In one example, an NVM drive comprises a housing to support one or more printed circuit assemblies (PCA's), the housing comprising a front portion, a rear portion and a heat sink, a PCA disposed within the housing, the PCA comprising a connector, one or more NVM chips and a controller attached to the one or more NVM chips. The PCA is centered in the housing, the NVM drive is hot-plugged into a fabric attached memory pool or local to a server by the rear portion of the housing, and the NVM drive hot-plugged in the fabric attached memory pool is accessible by the front portion of the housing.

## Description

### BACKGROUND

Server computers include a housing defining an enclosure in which are provided one or more processors, memory devices, input/output (I/O) devices, and storage devices. A server can include multiple pluggable storage drives that can be mounted e.g. in a side-by-side arrangement in which the front portions of each pluggable drive can be accessible by a user through the front or rear of the server enclosure. With such an arrangement, a user can remove or insert the front pluggable drive from or into the server enclosure. A storage device can contain different types of storage media, including non-volatile memory. Non-volatile memory (NVM) is a type of computer memory that can retrieve stored information even after having been power cycled (turned off and back on).

### BRIEF DESCRIPTION OF THE DRAWINGS

FIG. 1 illustrates an example of an NVM drive.
FIG. 2 illustrates elements of an example of an NVM drive.
FIG. 3 illustrates elements of an example of an NVM drive.
FIG. 4 illustrates another example of an NVM drive.
FIG. 5 illustrates an example of a fabric attached memory pool.
FIG. 6 illustrates an example of a flowchart for obtaining an NVM drive.

### DETAILED DESCRIPTION

The examples of storage drives shown in the present disclosure are non-volatile memory (NVM) hot-pluggable drives which can be hot inserted or hot removed into or from a network fabric attached memory pool shared by multiple servers or into or from a server computer for local storage. A hot-pluggable storage drive is a storage drive that can be inserted and removed from the fabric attached memory pool while the server computer remains powered. A NVM storage drive refers to any storage device that has an NVM storage medium (e.g., chip, magnetic or optical storage medium) to store data.

A blade enclosure is a chassis housing multiple modular electronic circuit boards in their own chassis, known as server blades. Each blade is a server in its own right, often dedicated to a single application. The blades contain processors, memory, integrated network controllers, (example a Fiber Channel host bus adaptor (HBA) and other input/output (IO) ports. Hot plugging (also called hot swapping) is the ability to add and remove devices to a computer system while the computer is running and have the operating system automatically recognize the change. This is useful when a system component fails as it enables a new device to be installed without system downtime.

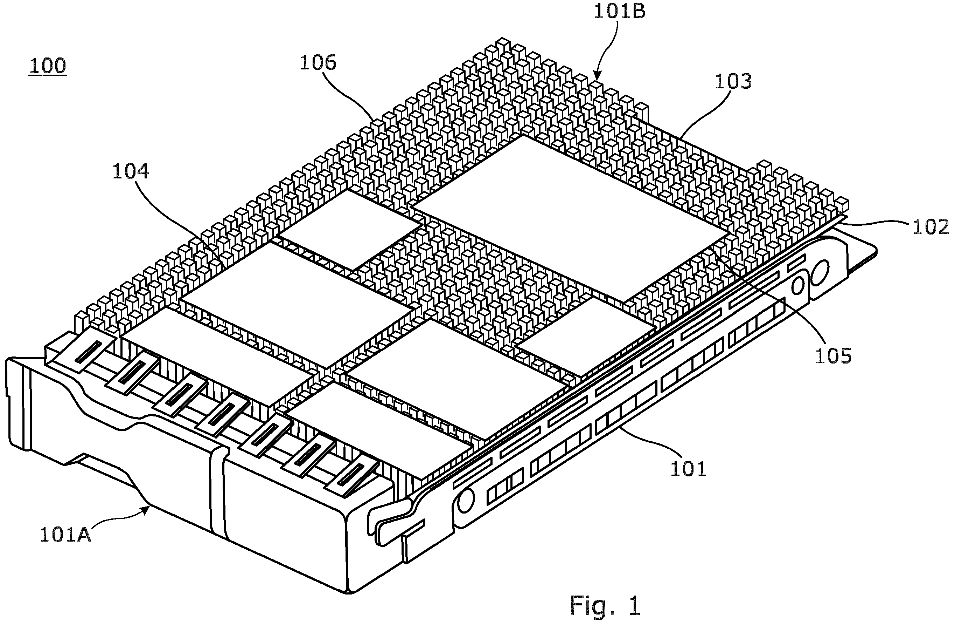

Fig 1 shows an example of a storage class memory drive, in particular a non-volatile memory (NVM) drive 100. The NVM drive 100 comprises a housing 101 capable to support one or more printed circuit assemblies (PCA). The housing 101 includes a front portion 101A and a rear portion 101B and a heat sink 106. A PCA 102 is disposed within the housing 101. The PCA comprises a connector 103, a number of NVM chips 104 established on a printed circuit board (PCB) as part of the PCA and a controller 105 attached to the NVM chips 104. The PCA 102 can be centered in the housing 101 as shown in Fig.1. The NVM drive 100 can be hot-plugged into a fabric attached memory pool by the rear portion 101B of the housing 101 or local to a server. Furthermore, the NVM drive 100 after hot-plugging in the fabric attached memory pool can be accessible by the front portion 101A of the housing 100. The NVM drive 100 can enable the maximum amount of media (NVM) to be attached to the controller 105 for maximum memory capacity.

The example of the NVM drive 100 presents a new form factor optimized for the fabric attached memory pool comprising the PCA 102 centered in the housing 101 for uniform cooling on each side of the drive 100 and permitting a symmetric thermal profile. In some examples, the controller can be a NVM media controller.

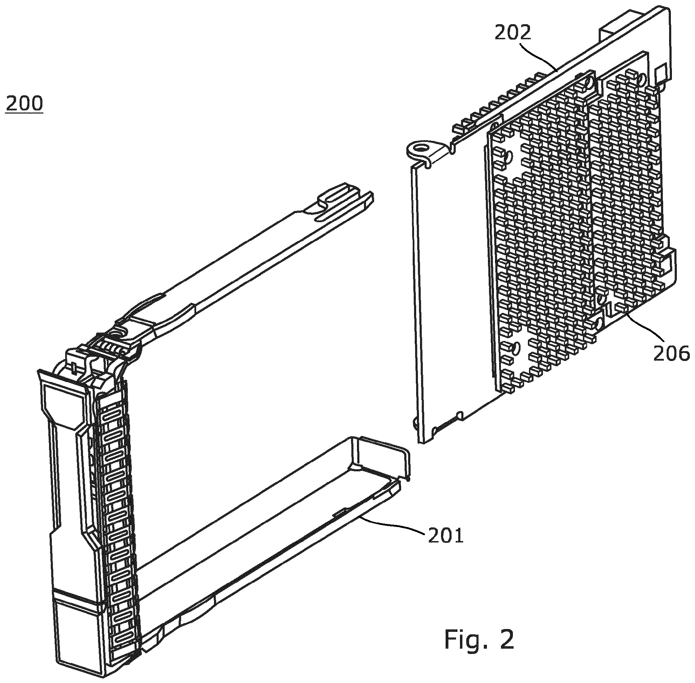

FIG. 2 shows elements of an example of an NVM drive 200. In particular Fig. 2 shows a housing 201 comprising a heat sink 206 and a PCA 202. The NVM drive 200 presents a particular form factor wherein the PCA 202 is centered in the housing 201 permitting uniform cooling within the NVM drive 200. The housing defines an inner chamber or enclosure.

In some examples, the PCA includes electrical contact pads comprising last mate-first break features for in-rush current control and electrostatic discharge protection. In-rush current is the maximum, instantaneous input current drawn by an electrical device when first turned on. An electrostatic discharge is the sudden flow of electricity between two electrically charged objects caused by contact, an electrical short, or dielectric breakdown.

In some examples, the NVM chips comprise flash, read-only-Memory (ROM), memristor, MRAM (Magneto-resistive RAM), F-RAM (Ferroelectric RAM) and ReRAM (Resistive RAM). A flash memory is electronic (solid-state) non-volatile computer storage medium that can be electrically erased and reprogrammed. A Read-only memory (ROM) is a type of non-volatile memory used in computers and other electronic devices. Data stored in ROM can only be modified slowly, with difficulty, or not at all, so it is mainly used to store firmware (software that is closely tied to specific hardware, and unlikely to need frequent updates) or application software in plug-in cartridges. MRAM (magnetoresistive random access memory) related to a method of storing data bits using magnetic charges instead of the electrical charges used by DRAM (dynamic random access memory). Ferroelectric RAM (FeRAM, F-RAM or FRAM) is a random-access memory similar in construction to DRAM but uses a ferroelectric layer instead of a dielectric layer to achieve non-volatility. A memory resistor (memristor) is a non-linear passive two-terminal electrical component considered to be the fourth fundamental electrical circuit element, in addition to the original fundamental circuit elements: resistors, capacitors and inductors. Like a resistor, it creates and maintains a safe flow of electrical current across a device, but it can also remember the last charge that was flowing through it. It differs from a regular resistor as it can "remember" charges even when there is no current or voltage present, allowing information storage even when the device is turned off.

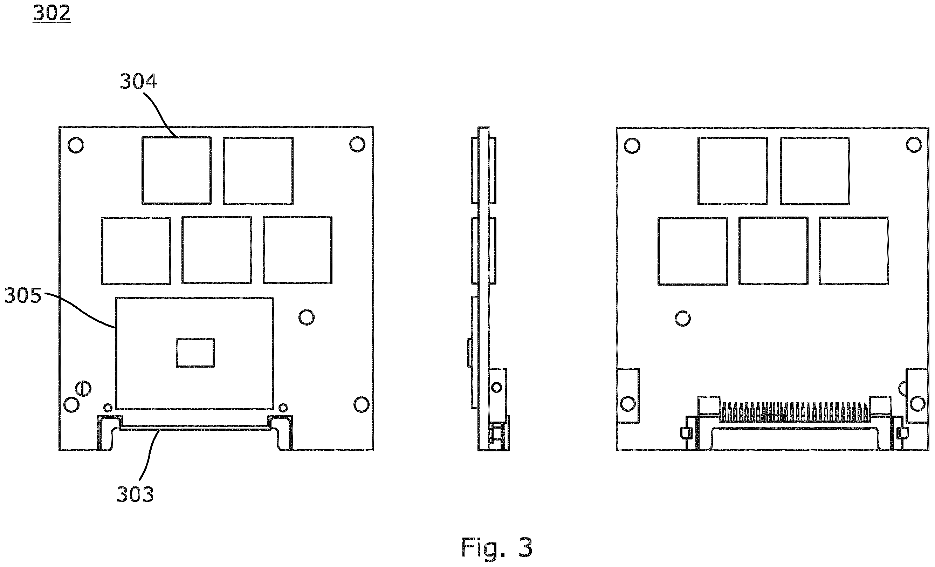

FIG. 3 shows three views of an example PCA 302 as part of an example NVM drive. In particular Fig. 3 shows a PCA 302 comprising a connector 303, five NVM chips 304 and a controller 305. The connector 303 comprises a connector SFF-8639 that can deliver I/O and power permitting a drop in upgrade. In another example, the connector 303 can comprise a high speed card edge interface with hot plug.

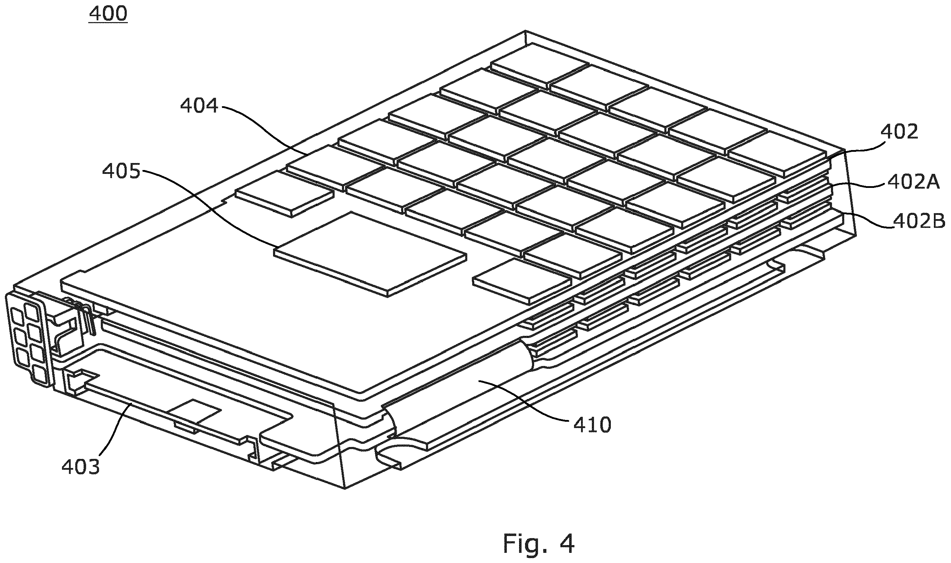

FIG.4 shows another example NVM drive 400. The NVM drive 400 comprises connector 403, a main or host PCA 402 and a first expansion PCA 402A and second expansion PCA 402B. The main PCA 402 comprises a controller 405 and a plurality of NVM chips 404. The first expansion PCA 402 A and the second expansion PCA 402 B are interconnected by means of a flexible printed circuit board 410. A flexible printed circuit can be defined as a printed circuit board that can flex. The flexible printed circuit 410 can connect the two parallel printed circuit assemblies (e.g. the first expansion PCA 402 A and the second expansion PCA 402 B) in a stacking configuration. The expansion boards PCA 402A and PCA 402B connected by flex PCB 410 can be discrete devices sharing a network bus wherein each discrete device can host a controller and NVM chips. Hence, the first expansion PCA 402 A can comprise a plurality of NVM chips and a controller not visible and the second expansion PCA 402 B can comprise a plurality of NVM chips and another controller not visible. In another example, the main board comprising a connector interface can host a controller (not visible) and the other boards (e.g. 402A and 402B) can act as capacity expanders and host additional NVM chips. Furthermore, the first expansion PCA 402 A and the second expansion PCA 402 B include electrical contact pads comprising in-rush voltage control features and electrostatic discharge protection features. Hence, the density of the NVM chips can be increased by connecting multiple PCA's through one or more flexible printed circuits 410 integrated during the lamination process of the PCB's of the PCA's.

In another example, the NVM drive 400 can comprise one or more mezzanine connectors attached to the first expansion PCA 402 A and the second expansion PCA 402 B, the one or more mezzanine connectors interconnecting the PCA 402 and the first expansion PCA 402 A and the second expansion PCA 402 B.

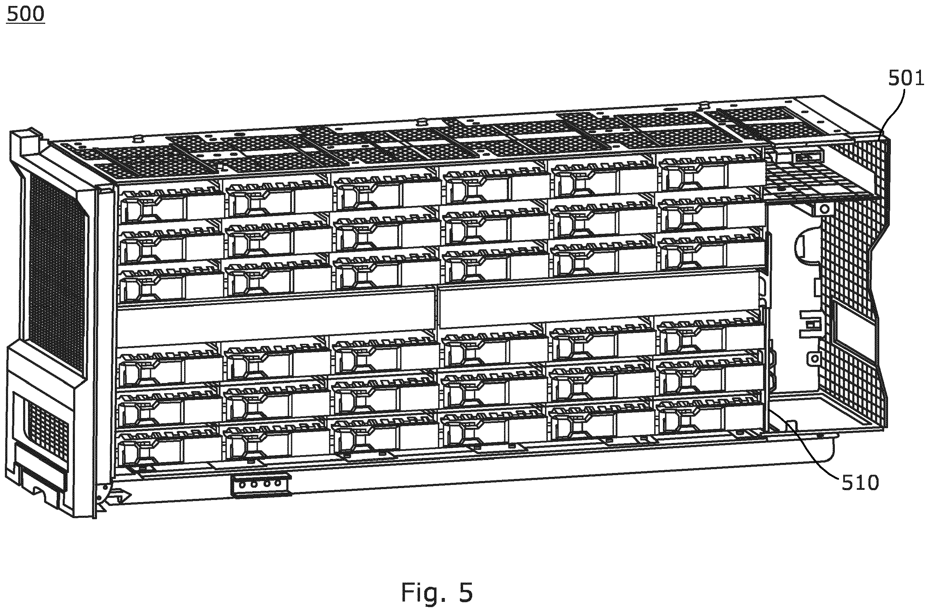

Fig. 5 shows a fabric attached memory pool 500 as e.g. an NVM module, a blade server or a rackmount server. The pool 500 comprises an enclosure 501. The fabric attached memory pool 500 can comprise the examples of NVM drives shown in the present disclosure in in-line arrangement. The in-line arrangement of NVM drives allows for more efficient usage of the available space for mounting the NVM drives in the enclosure of the housing 501 of the fabric attached memory pool 500 such that more expensive low profile components (e.g. very low profile memory modules) would not have to be employed to enhance the available space for the storage drives. The pool 500 comprises a matrix of 6x6 NVM drives but can be any other matrix dimension based on capacity needs 510.

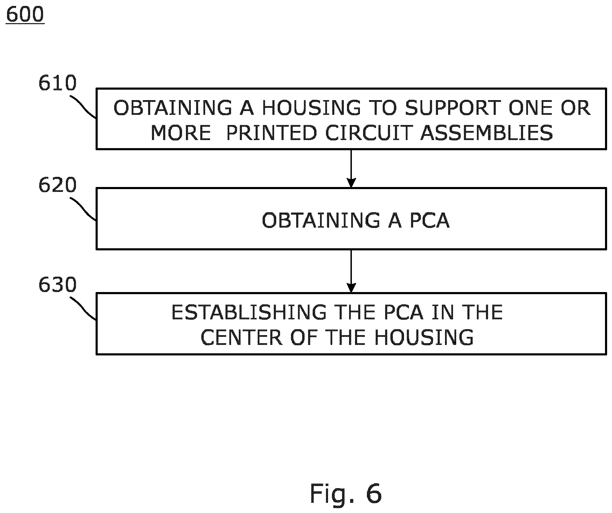

Fig. 6 shows an example of a flowchart 600 for obtaining a non-volatile memory (NVM) drive. The diagram 600 comprises step 610 for obtaining a housing to support one or more printed circuit assemblies (PCA's), the housing including a front portion and a rear portion.

The diagram 600 comprises step 620 for obtaining a PCA by attaching to a printed circuit board at least a connector, one or more NVM chips and a controller attached to the one or more NVM chips to manage the access to the NVM chips and communicate to a network.

The diagram 600 comprises step 630 for establishing the PCA in the center of the housing. A PCA centered in the housing can improve the thermal performance of the NVM drive by achieving a symmetric thermal profile. In other examples, the diagram 600 can comprise a further step for hot-plugging the NVM drive into a fabric attached memory pool by the rear portion of the housing.

In another example, the diagram 600 can comprise a further step for accessing the NVM drive hot-plugged in the fabric attached memory pool by the front portion of the housing. In another examples, the diagram 600 can comprise further steps for obtaining one or more expansion PCA's, wherein each expansion PCA comprises one or more NVM chips and for interconnecting the PCA and the one or more expansion PCA's with one or more flex cables.

In another example, the diagram 600 can comprise further steps for obtaining one or more expansion PCA's, wherein each expansion PCA comprises one or more NVM chips and interconnecting the PCA and the one or more expansion PCA's with one or more mezzanine connectors.

In another example, the diagram 600 can comprise a step for establishing hot-plugging features into the non-volatile memory NVM drive. In another examples, the diagram 600 can comprise a step for establishing in-rush voltage control features to the NVM drive, the in-rush control features comprising one or more last mate-first break features.

In some examples, the aforementioned flux diagram 600 for obtaining an NVM drive can be used to obtain a fabric attached memory pool. The fabric attached memory pool can be obtained by using an enclosure, obtaining a plurality of NVM drives according to the diagram 600 and aggregating into the enclosure the one or more obtained non-volatile memory NVM drives.

Furthermore, relative terms used to describe the structural features of the figures illustrated herein are in no way limiting to conceivable implementations. It is, of course, not possible to describe every conceivable combination of components or methods, but one of ordinary skill in the art will recognize that many further combinations and permutations are possible. Accordingly, the invention is intended to embrace all such alterations, modifications, and variations that fall within the scope of this application, including the appended claims. Additionally, where the disclosure or claims recite "a," "an," "a first," or "another" element, or the equivalent thereof, it should be interpreted to include one or more than one such element, neither requiring nor excluding two or more such elements.

## Claims

1. An non-volatile memory (NVM) drive, the drive comprising:
a housing to support one or more printed circuit assemblies (PCA's), the housing comprising a front portion, a rear portion and a heat sink;
a PCA disposed within the housing, the PCA comprising:
a connector;
one or more NVM chips; and
a controller attached to the one or more NVM chips,
wherein the PCA is centered in the housing,
wherein the NVM drive is hot-plugged into a fabric attached memory pool or local to a server by the rear portion of the housing, and
wherein the NVM drive hot-plugged in the fabric attached memory pool is accessible by the front portion of the housing.

2. The NVM drive of claim 1, wherein the PCA includes electrical contact pads comprising last mate-first break features for in-rush current control and electrostatic discharge protection.

3. The NVM drive of claim 1, wherein the one or more NVM chips comprise one or more of the following technologies:
flash;
read-only-Memory (ROM);
memristor;
MRAM (Magneto-resistive RAM);
F-RAM (Ferroelectric RAM); and
ReRAM (Resistive RAM).

4. The NVM drive of claim 1, further comprising one or more expansion PCA's, wherein each expansion PCA comprises one or more NVM chips and the one or more expansion PCA's are controlled by at least one NVM controller.

5. The NVM drive of claim 4, further comprising one or more mezzanine connectors, the one or more mezzanine connectors interconnecting the PCA and the one or more expansion PCA's.

6. The NVM drive of claim 4, further comprising one or more flexible printed circuits attached to the one or more expansion PCA's, the one or more flexible printed circuits interconnecting the PCA and the one or more expansion PCA's.

7. The NVM drive of claim 1, wherein the NVM is a part of a fabric attached memory pool.

8. The NVM drive of claim 7, wherein the fabric attached memory pool is a blade server or rackmount server.

9. A method for obtaining an non-volatile memory (NVM) drive, the method comprising:
obtaining a housing to support one or more printed circuit assemblies (PCA's), the housing including a front portion and a rear portion;
obtaining a PCA by attaching the following components to a printed circuit board:
a connector;
one or more NVM chips; and
a controller attached to the one or more NVM chips, and establishing the PCA in the center of the housing.

10. The method of claim 9 further comprising hot-plugging the NVM drive into a fabric attached memory pool by the rear portion of the housing.

11. The method of claim 10 further comprising accessing the NVM drive hot-plugged in the fabric attached memory pool by the front portion of the housing.

12. The method of claim 9, further comprising:
obtaining one or more expansion PCA's, wherein each expansion PCA comprises one or more NVM chips; and
interconnecting the PCA and the one or more expansion PCA's with one or more flex cables.

13. The method of claim 9, further comprising:
obtaining one or more expansion PCA's, wherein each expansion PCA comprises one or more NVM chips; and
interconnecting the PCA and the one or more expansion PCA's with one or more mezzanine connectors.

14. The method of claim 9, further comprising establishing hot-plugging features into the NVM drive.

15. A method for fabricating a non-volatile memory (NVM) module, the method comprising:
obtaining an enclosure;
obtaining one or more NVM drives according to any of claims 1 to 8;
aggregating into the enclosure the one or more obtained NVM drives.
